# EUROPEAN PATENT APPLICATION

(11) **EP 3 798 681 A1**
(43) Date of publication of application: **31.03.2021**
(21) Application number: 20197257.7
(22) Date of filing: 21.09.2020
(51) Int. Cl.: G01S 17/931, G01S 7/481, B60R 13/00

(54) **NEAR-INFRARED SENSOR COVER**

(30) Priority: 27.09.2019 JP 2019177556
(71) Applicant: Toyoda Gosei Co., Ltd., Kiyosu-shi, Aichi 452-8564 (JP); Shinko Nameplate Co., Ltd., Sagamihara-shi, Kanagawa 252-0245 (JP)
(72) Inventor: OKUMURA, Koji, Kiyosu-shi, Aichi 452-8564 (JP); FUKAGAWA, Koji, Kiyosu-shi, Aichi 452-8564 (JP); MIKAMI, Kouki, Sagamihara-shi, Kanagawa 252-0245 (JP); IKEGAME, Takazumi, Sagamihara-shi, Kanagawa 252-0245 (JP)
(74) Representative: Kramer Barske Schmidtchen Patentanwälte PartG mbB

(57) **Abstract**

A near-infrared sensor cover includes a cover body that is transmissive to near-infrared light. The cover body includes a base, a hard coating layer, a heater, and an anti-reflection layer. The base is formed from a transparent resin material. The hard coating layer is formed at a front of the base in a transmission direction of near-infrared light and has a greater hardness than the base. The heater is formed at a rear of the base in the transmission direction and formed by a linear heating element that generates heat when energized. The anti-reflection layer is formed at a rear of the heater in the transmission direction to limit reflection of near-infrared light.

## Description

### BACKGROUND

### 1. Field

The following description relates to a near-infrared sensor cover that is configured to cover a transmitter and a receiver of near-infrared light in a near-infrared sensor.

### 2. Description of Related Art

A near-infrared sensor installed on a vehicle includes a transmitter and a receiver of near-infrared light. The transmitter and the receiver are covered by a cover body of a near-infrared sensor cover. The cover body is transmissive to near-infrared light.

The near-infrared sensor described above transmits near-infrared light from the transmitter toward the outside of the vehicle through the cover body. When the near-infrared light hits an object outside the vehicle, the reflected near-infrared light is received by the receiver through the cover body. The near-infrared sensor recognizes the object outside the vehicle and detects the distance between the vehicle and the object, the speed of the vehicle relative to the object, and the like based on the transmitted near-infrared light and the received near-infrared light.

When snow collects on the near-infrared sensor described above, the collected snow interferes with transmission of near-infrared light. The near-infrared sensor is configured to temporarily stop the detection when snow is collected. As near-infrared sensors are widely used, there is a need to perform the detection even during snowfall.

Various near-infrared sensor covers that are capable of melting snow have been considered. For example, Japanese Laid-Open Patent Publication No. 2018-31888 discloses a near-infrared sensor cover including a cover body and a heater. The cover body includes a framework including a transparent base. The base of the cover body is laminated with the heater from the rear in a transmission direction of the near-infrared light. A heater film including a linear heating element that generates heat when energized is used as the heater. The heater film includes the heating element and two transparent bases. The transparent bases are formed from a resin material and sandwich the heating element from the front side and the rear side in the transmission direction to cover the heating element.

When laminating the base with the heater, the heater film is applied to the base. The frontmost portion of the heater film in the transmission direction includes an adhesive layer so that the heater film is applied to the base. A film of an optical adhesive sheet, which is referred to as an optical clear adhesive (OCA), is used as the adhesive layer. The OCA is applied to a rear surface of the base in the transmission direction.

### SUMMARY

In the configuration described above, when laminating the base with the heater, the OCA of the heater film needs to be applied to the base. The application task is burdensome.

It is an objective of the present disclosure is to provide a near-infrared sensor cover capable of melting snow without performing an application task.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

To achieve the objective described above, a near-infrared sensor cover is configured to cover a transmitter and a receiver of near-infrared light in a near-infrared sensor. The near-infrared sensor cover includes a cover body that is transmissive to near-infrared light. The cover body includes a base formed from a transparent resin material, a hard coating layer formed at a front of the base in a transmission direction of near-infrared light and having a greater hardness than the base, a heater formed at a rear of the base in the transmission direction and formed by a linear heating element that generates heat when energized, and an anti-reflection layer formed at a rear of the heater in the transmission direction that limits reflection of near-infrared light.

Other features and aspects will be apparent from the following detailed description, the drawings, and the claims.

### BRIEF DESCRIPTION OF THE DRAWINGS

Fig. 1 is a side cross-sectional view showing a near-infrared sensor including a first embodiment of a near-infrared sensor cover.
Fig. 2 is a partially enlarged side cross-sectional view of the cover body shown in Fig. 1.
Fig. 3 is a side cross-sectional view showing a second embodiment of a near-infrared sensor cover and a near-infrared sensor.
Fig. 4 is a partially enlarged side cross-sectional view of the cover body shown in Fig. 3.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

### First Embodiment

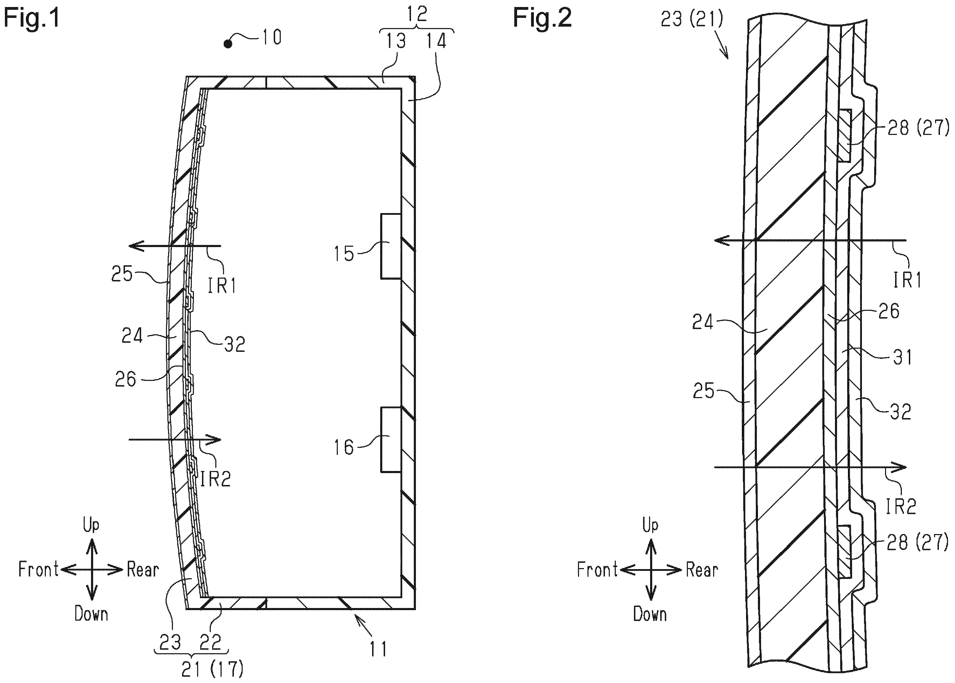

A first embodiment of a near-infrared sensor cover 21 will be described below with reference to Figs. 1 and 2.

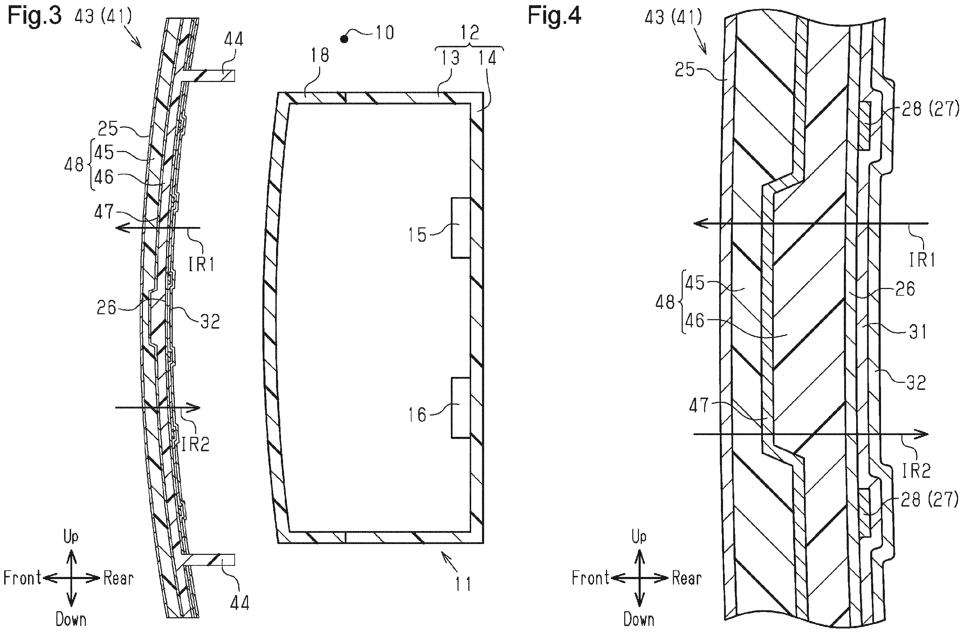

In the following description, the direction in which the vehicle advances forward will be referred to as the front, and the reverse direction will be referred to as the rear. In Figs. 1 and 2, in order to make the size of each member of the near-infrared sensor cover recognizable, the scale of each member is altered as necessary. The same applies to Figs. 3 and 4, which shows a second embodiment.

As shown in Fig. 1, a near-infrared sensor 11 is installed on a front end of a vehicle 10. The near-infrared sensor 11 is configured to transmit near-infrared light IR1 having a wavelength of around 900 nm toward the front of the vehicle 10 and receive near-infrared light IR2 that is reflected when hitting an object located outside the vehicle. The object includes a preceding vehicle, a pedestrian, and the like. The near-infrared sensor 11 recognizes the object located outside the vehicle and detects the distance between the vehicle 10 and the object, the speed of the vehicle 10 relative to the object, and the like based on the transmitted near-infrared light IR1 and the received near-infrared light IR2.

As described above, the near-infrared sensor 11 transmits the near-infrared light IR1 toward the front of the vehicle 10. The transmission direction of the near-infrared light IR1 from the near-infrared sensor 11 conforms to the direction from the rear toward the front of the vehicle 10. The front in the transmission direction of the near-infrared light IR1 substantially conforms to the front of the vehicle 10. The rear in the transmission direction substantially conforms to the rear of the vehicle 10. In the description hereafter, frontward in the transmission direction of the near-infrared light IR1 is simply referred to as "frontward," "the front," and the like, rearward in the transmission direction is simply referred to as "rearward," "the rear," and the like.

The near-infrared sensor 11 includes an outer shell. The outer shell includes a rear half including a case 12. The outer shell of the near-infrared sensor 11 has a front half including a cover 17. The case 12 includes a tubular peripheral wall 13 and a bottom wall 14 formed on a rear end of the peripheral wall 13. The case 12 has the shape of a tube having a closed end and a front opening. The entirety of the case 12 is formed from a resin material such as polybutylene terephthalate (PBT). A transmitter 15 configured to transmit the near-infrared light IR1 and a receiver 16 configured to receive the near-infrared light IR2 are arranged at the front of the bottom wall 14.

The cover 17 of the near-infrared sensor 11 includes the near-infrared sensor cover 21. The near-infrared sensor cover 21 includes a tubular peripheral wall 22 and a plate-shaped cover body 23 formed on a front end of the peripheral wall 22.

The cover body 23 is sized to close the front end opening of the case 12. The cover body 23 is located at the front of the bottom wall 14 and covers the transmitter 15 and the receiver 16 from frontward.

As shown in Fig. 2, the cover body 23 includes a framework including a base 24. The base 24 is formed from a transparent resin material that is transmissive to the near-infrared light IR1 and IR2. In the present disclosure, transparency includes colored transparency (color transparency) in addition to colorless transparency. In the first embodiment, the base 24 is formed from polycarbonate (PC). Alternatively, the base 24 may be formed from polymethyl methacrylate (PMMA), cycloolefin polymer (COP), or the like.

The base 24 includes a front surface laminated with a hard coating layer 25 that is transmissive to the near-infrared light IR1 and IR2 and has a greater hardness than the base 24. The hard coating layer 25 is formed by applying a known surface processing agent to the front surface of the base 24. Examples of the surface processing agent include acrylate-based, oxetane-based, and silicone-based organic hard coating agents; an inorganic hard coating agent; an organic-inorganic hybrid hard coating agent; and the like. The hard coating agent may be of a type that is cured when irradiated with ultraviolet (UV) light or a type that is cured when heated.

The base 24 includes a rear surface on which a heater 27 is formed via an undercoat layer 26. More specifically, the undercoat layer 26 is formed between the base 24 and the heater 27, and the heater 27 is in tight contact with the base 24 via the undercoat layer 26. The heater 27 is formed by a heating element 28 that generates heat when energized. The material of the heating element 28 is, for example, a metal such as silver or copper, a conductive material of a metal oxide such as indium tin oxide (ITO) or tin oxide, a carbon heating element, a conductive paste, or the like. The material described above is sputtered or printed onto the undercoat layer 26 or applied to the undercoat layer 26 using a dispenser (quantitative liquid discharger) to form the heating element 28. The conductive paste is, for example, a resin material in which silver particles or the like are dispersed as filler.

The heating element 28 is linear and includes, for example, straight portions extending parallel to each other and connecting portions that connect ends of adjacent ones of the straight portions to each other. The first embodiment differs from a typical configuration in that a heater film is not used as the heater 27.

The undercoat layer 26 is used for the following reasons. In the first embodiment, PC is used as the resin material forming the base 24. The solubility parameter (SP) value of PC is greater than a value appropriate to the SP value of the heating element. Thus, PC and the heating element 28 have a low compatibility and have a low adhesion to each other. The undercoat layer 26 is arranged between the base 24 and the heater 27 to improve the adhesion of the heating element 28 to the base 24. The material forming the undercoat layer 26 may be of a type that is cured when heated or a type that is cured when irradiated with ultraviolet (UV) light.

A protective film 31 is formed on the rear surface of the undercoat layer 26 and the heater 27 to increase the durability of the heater 27. The protective film 31 is formed by applying an acrylic or urethane paint to the undercoat layer 26 and the heater 27 and curing the paint through irradiation by ultraviolet light or application of heat.

An anti-reflection layer 32 (also referred to as AR coating) is formed of a transparent thin film on the rear surface of the protective film 31 to limit reflection of the near-infrared light IR1 transmitted from the transmitter 15. The anti-reflection layer 32 reduces reflection of the near-infrared light IR1 in the rear surface of the cover body 23 using interference with the near-infrared light IR1 to limit a decrease in the amount of the near-infrared light IR1 transmitting through the cover body 23 caused by the reflection. The anti-reflection layer 32 is formed by performing vacuum deposition, sputtering, wet coating, or the like using, for example, a dielectric such as magnesium fluoride (MgF₂).

The anti-reflection layer 32 may include a single-layer thin film or multilayer thin films. When the anti-reflection layer 32 includes multilayer thin films, the refractive index and the thicknesses may differ between the thin films. Such a configuration reduces reflection of the near-infrared light IR1 in a wide range of wavelengths.

In addition, a lamination of a metal oxide such as titanium dioxide TiO₂, silicon dioxide SiO₂, niobium pentoxide Nb₂O₅ or the like may be used as the anti-reflection layer 32.

In the cover body 23 having the configuration described above, the transmittance of the near-infrared light IR1 and IR2 is, preferably, greater than or equal to 60%, and is, more preferably, greater than or equal to 90%. The reflectance of the near-infrared light IR1 in the rear surface of the cover body 23 having the configuration described above is less than or equal to 10%.

The operation of the first embodiment will now be described. Also, the advantages obtained according to the operation will be described.

As shown in Figs. 1 and 2, when the near-infrared light IR1 is transmitted from the transmitter 15 of the near-infrared sensor 11, the rear surface of the cover body 23 is irradiated with the near-infrared light IR1. At this time, the anti-reflection layer 32 limits reflection of the irradiated near-infrared light IR1 in the rear surface of the cover body 23. The reflectance of the near-infrared light IR1 is limited to 10% or less. The near-infrared light IR1 transmitting through the anti-reflection layer 32 is increased by an amount corresponding to the limitation.

The near-infrared light IR1 that has transmitted through the anti-reflection layer 32 sequentially transmits through the protective film 31, the heater 27, the undercoat layer 26, the base 24, and the hard coating layer 25. Thus, the near-infrared light IR1 transmits through the cover body 23.

The near-infrared light IR1 that transmitted through the cover body 23 hits and is reflected by an object including a preceding vehicle, a pedestrian, and the like. The reflected near-infrared light IR2 again sequentially transmits through the hard coating layer 25, the base 24, the undercoat layer 26, the heater 27, the protective film 31, and the anti-reflection layer 32 of the cover body 23. The near-infrared light IR2 that transmitted through the cover body 23 is received by the receiver 16. The near-infrared sensor 11 recognizes the object and detects the distance between the vehicle 10 and the object, the speed of the vehicle 10 relative to the object, and the like based on the transmitted near-infrared light IR1 and the received near-infrared light IR2.

As described above, the near-infrared light IR1 and IR2 that transmits through the cover body 23 is increased by an amount corresponding to the limitation of reflection of the near-infrared light IR1 in the anti-reflection layer 32.

The transmittance of the near-infrared light IR1 and IR2 in the cover body 23 is greater than or equal to 60%. The cover body 23 has little interference with the transmission of the near-infrared light IR1 and IR2. The amount of the near-infrared light IR1 and IR2 that is dampened by the cover body 23 is limited to an allowable range. As a result, the near-infrared sensor 11 readily accomplishes the recognition of the object and the detection of the distance between the vehicle 10 and the object, the speed of the vehicle 10 relative to the object, and the like.

In addition, in the near-infrared sensor cover 21, the hard coating layer 25 formed on the front surface of the base 24 increases the impact resistance of the cover body 23. The hard coating layer 25 limits damage to the front surface of the cover body 23 caused by an airborne stone or the like. The hard coating layer 25 also increases the weathering resistance of the cover body 23. The hard coating layer 25 limits transformation and deterioration of the cover body 23 caused by sunlight, wind, rain, and changes in the temperature. Also, in this point, the near-infrared sensor 11 readily accomplishes the object recognition and the detection.

The linear heating element 28 of the heater 27 generates heat when energized. The heat is partially transmitted to the front surface of the cover body 23. Thus, even when snow collects on the front surface of the cover body 23, the heating element 28 is energized to generate heat so that the snow is melted by the heat transmitted from the heating element 28. Even during snowfall, the near-infrared sensor 11 accomplishes the recognition and the detection.

As described above, in the near-infrared sensor cover 21, the heater 27 is formed by the linear heating element 28 that generates heat when energized. The heating element 28 is formed on the rear side of the base 24 in the transmission direction through sputtering or printing or applying using a dispenser (quantitative liquid discharger), so that the heater 27 is arranged between the base 24 and the anti-reflection layer 32. Thus, unlike in a typical near-infrared sensor cover, a heater film does not need to be used to form the heater. Accordingly, a burdensome task such as application of OCA of the heater film to the base does not need to be performed.

The first embodiment has the following advantage in addition to those described above.

The base 24 is formed of PC having a greater SP value than the heater 27. The heating element 28 and PC have a low compatibility and have a low adhesion to each other.

In the first embodiment, the undercoat layer 26 is formed between the base 24 and the heater 27. The undercoat layer 26 increases the adhesion of the heater 27 to the base 24. As compared to when the heater 27 is formed in contact with the base 24, the heater 27 is in tighter contact with the base 24, so that separation of the heater 27 from the base 24 is limited.

The protective film 31 covers and protects the heater 27 from the rear. The durability of the heater 27 is increased as compared to when the heater 27 is not covered by the protective film 31.

In the prior art, as described above, the heater film used as the heater includes a lamination of the two transparent bases, the heating element, the OCA, and the like and thus has a multilayer structure. Increases in the number of layers produce various problems as described below.
(a) Near-infrared light is reflected and absorbed in interfaces between layers. Use of a heater film increases the number of interfaces. As a result, the amount of reflection and absorption of near-infrared light in the heater is increased. This lowers the detection accuracy of the near-infrared sensor.
(b) Near-infrared light deflects somewhat in interfaces between layers. As the number of interfaces increases, the total deflection angle of near-infrared light will increase. This lowers the detection accuracy related to an angle of the near-infrared sensor.
(c) As the number of layers increases, the manufacturing steps of the heater and the materials of the heater are increased. This increases the manufacturing cost.
(d) Adjacent layers may separate from each other. Increases in the number of layers increase the number of locations where the separation may occur. In addition, adjacent layers are more likely to separate from each other in accordance with increases in the difference in the coefficient of thermal expansion between the layers. As the number of layers increases, it is difficult to ensure the adhesion in the interfaces.

In this regard, in the first embodiment, the heater 27 is formed by the heating element 28. The heater 27 has a single layer, which is fewer than that of a heater including a heater film. Thus, the above-described issues (a) to (d) are improved as compared to when the heater includes the heater film.

### Second Embodiment

A second embodiment of a near-infrared sensor cover 41 will be described below with reference to Figs. 3 and 4.

In the second embodiment, as shown in Fig. 3, a near-infrared sensor cover 41 is arranged separately from the near-infrared sensor 11. More specifically, the near-infrared sensor 11 includes the case 12, the transmitter 15, the receiver 16, and a cover 18. The transmitter 15 and the receiver 16 are coupled to the case 12. The cover 18 is arranged at the front of the case 12 to cover the transmitter 15 and the receiver 16. The cover 18 is formed from a resin material containing a visible light cut-off pigment, for example, PC, PMMA, COP, resin glass, or the like.

The near-infrared sensor cover 41 includes a plate-shaped cover body 43 and an attachment portion 44 projecting rearward from a rear surface of the cover body 43. The cover body 43 is located at the front of the cover 18 to indirectly cover the transmitter 15 and the receiver 16 from the front via the cover 18. The near-infrared sensor cover 41 is fixed to the vehicle 10 at the attachment portion 44.

The near-infrared sensor cover 41 is used as a garnish that decorates a front portion of the vehicle 10 in addition to covering the transmitter 15 and the receiver 16 from frontward in the same manner as the cover 17 of the near-infrared sensor 11 in the first embodiment.

As shown in Fig. 4, the cover body 43 of the near-infrared sensor cover 41 in the second embodiment includes the hard coating layer 25, a base, the undercoat layer 26, the heater 27, the protective film 31, and the anti-reflection layer 32, which is basically the same as the first embodiment.

The second embodiment differs from the first embodiment in that the base is divided into a front base 45 including a front portion of the base and a rear base 46 including a rear portion of the base and that a decorative layer 47 is arranged between the front base 45 and the rear base 46. More specifically, the base of the cover body 43 in the second embodiment includes a base 48 including the front base 45 and the rear base 46.

The base 48, that is, the front base 45 and the rear base 46, is formed from a transparent resin material and is transmissive to the near-infrared light IR1 and IR2 in the same manner as the base 24 of the first embodiment. The decorative layer 47 is used to decorate the near-infrared sensor cover 41 and includes at least one of a luminance decorative layer or a colored decorative layer. The decorative layer 47 is formed from a material having a high transmittance of the near-infrared light IR1 and IR2 and a low transmittance of visible light. The decorative layer 47 has irregularities in a front-rear direction.

Other than the differences described above, the second embodiment is the same as the first embodiment. In the second embodiment, the same reference numerals are given to those components that are the same as the corresponding components of the first embodiment and detailed explanations are omitted.

In the second embodiment, when the transmitter 15 of the near-infrared sensor 11 transmits the near-infrared light IR1, the near-infrared light IR1 sequentially transmits through the anti-reflection layer 32, the protective film 31, the heater 27, the undercoat layer 26, the rear base 46, the decorative layer 47, the front base 45, and the hard coating layer 25 of the cover body 43.

When the near-infrared light IR2 hits and is reflected by an object located outside the vehicle, the near-infrared light IR2 again sequentially transmits through the hard coating layer 25, the front base 45, the decorative layer 47, the rear base 46, the undercoat layer 26, the heater 27, the protective film 31, and the anti-reflection layer 32 of the cover body 43. The near-infrared light IR2 that transmitted through the cover body 43 is received by the receiver 16.

The second embodiment obtains the same operations and advantages as the first embodiment. Additionally, the second embodiment obtains the following operations and advantages.

When the cover body 43 is irradiated with visible light from the front, the visible light transmits through the hard coating layer 25 and the front base 45 and is reflected by the decorative layer 47. When the near-infrared sensor cover 41 is viewed from the front of the vehicle, the decorative layer 47 can be seen at the rear of (behind) the front base 45 through the hard coating layer 25 and the front base 45. Thus, the decorative layer 47 decorates the near-infrared sensor cover 41 and improves the presentation of the near-infrared sensor cover 41 and its peripheral parts.

In particular, the decorative layer 47 is formed between the front base 45 and the rear base 46 and has irregularities. The decorative layer 47 is seen in three dimensions from the front of the vehicle 10. This further improves the presentation of the near-infrared sensor cover 41 and its peripheral parts.

The decorative layer 47 reflects visible light at the front of the near-infrared sensor 11. The decorative layer 47 covers and conceals the near-infrared sensor 11. The near-infrared sensor 11 cannot be easily seen from the front of the near-infrared sensor cover 41. Thus, the ornamentality is improved as compared to when the near-infrared sensor 11 is transparent and visible through the near-infrared sensor cover 41.

The embodiments may be modified as follows. The embodiments and the following modified examples can be combined as long as the combined modified examples remain technically consistent with each other.

The configuration of the base of the near-infrared sensor cover 21 in the first embodiment may be applied to the configuration of the base of the near-infrared sensor cover 41 in the second embodiment. Also, the configuration of the base of the near-infrared sensor cover 41 in the second embodiment may be applied to the configuration of the base of the near-infrared sensor cover 21 in the first embodiment.

The front surface of the hard coating layer 25 may be laminated with a water repellent layer. The water repellent layer includes, for example, an organic painting film, a silicone film, or the like.

In the first embodiment, depending on the type of resin material forming the base 24, the compatibility with the heating element 28 may be satisfactory, and the adhesion between the resin material and the heating element 28 may be adequate. The same applies to the type of resin material forming the base 48 (front base 45 and rear base 46) in the second embodiment. Examples of such resin materials include an acrylic resin and a urethane resin. When the base 24 and the base 48 (front base 45 and rear base 46) are formed from such a resin material, the undercoat layer 26 may be omitted.

When the heater 27 has sufficient durability, the covering of the heater 27 with the protective film 31 may be omitted.

The near-infrared sensor covers 21 and 41 may be used in the near-infrared sensor 11 that is installed on a location different from the front portion of the vehicle 10, which is, for example, the rear portion of the vehicle 10. In this case, the near-infrared sensor 11 transmits the near-infrared light IR1 toward the rear of the vehicle 10. The near-infrared sensor covers 21 and 41 are arranged at the front of the transmitter 15 in the transmission direction of the near-infrared light IR1, that is, the rear of the vehicle 10 with respect to the transmitter 15.

The near-infrared sensor covers 21 and 41 may be used in near-infrared sensors 11 that are located at opposite sides of the front portion or the rear portion of the vehicle 10, that is, oblique front portions or oblique rear portions.

Throughout the drawings and the detailed description, the same reference numerals refer to the same elements. The drawings may not be to scale, and the relative size, proportions, and depiction of elements in the drawings may be exaggerated for clarity, illustration, and convenience.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A near-infrared sensor cover configured to cover a transmitter (15) and a receiver (16) of near-infrared light in a near-infrared sensor (11) and including a cover body (23; 43) that is transmissive to near-infrared light, the near-infrared sensor cover being **characterized in that** the cover body (23; 43) includes
a base (24; 48) formed from a transparent resin material,
a hard coating layer (25) formed at a front of the base (24; 48) in a transmission direction of near-infrared light and having a greater hardness than the base (24; 48),
a heater (27) formed at a rear of the base (24; 48) in the transmission direction and formed by a linear heating element (28) that generates heat when energized, and
an anti-reflection layer (32) formed at a rear of the heater (27) in the transmission direction that limits reflection of near-infrared light.

2. The near-infrared sensor cover according to claim 1, **characterized in that**
the base (48) includes a front base (45) and a rear base (46) arranged at a rear of the front base (45) in the transmission direction, and
the near-infrared sensor cover further includes a decorative layer (47) arranged between the front base (45) and the rear base (46), wherein the decorative layer (47) is transmissive to near-infrared light.

3. The near-infrared sensor cover according to claim 1 or 2, further **characterized by**:
an undercoat layer (26) formed between the base (24; 48) and the heater (27), wherein
the undercoat layer (26) is transmissive to near-infrared light, and
the heater (27) is in tight contact with the base (24; 48) via the undercoat layer (26).

4. The near-infrared sensor cover according to any one of claims 1 to 3, further **characterized by**:
a protective film (31) formed between the heater (27) and the anti-reflection layer (32), wherein
the protective film (31) is transmissive to near-infrared light, and
the heater (27) is covered by the protective film (31) from rearward in the transmission direction.
